# EUROPÄISCHE PATENTSCHRIFT

(11) **EP 3 328 015 B1**
(45) Veröffentlichungstag und Bekanntmachung des Hinweises auf die Patenterteilung: **06.02.2019**
(21) Anmeldenummer: 16020465.7
(22) Anmeldetag: 24.11.2016
(51) Int. Cl.: H04L 29/06

(54) **SYSTEM UND VERFAHREN ZUM KOPPELN VON VOIP DIENSTEN VON EINEM MOBILFUNKANSCHLUSS UND EINEM FESTNETZANSCHLUSS**
SYSTEM AND METHOD FOR COUPLING OF VOIP SERVICES FROM A MOBILE WIRELESS CONNECTION AND A FIXED LINE CONNECTION
SYSTÈME ET PROCÉDÉ DE COUPLAGE DE SERVICES VOIP ENTRE UNE CONNEXION MOBILE ET UNE CONNEXION FIXE

(43) Veröffentlichungstag der Anmeldung: 30.05.2018
(73) Patentinhaber: Deutsche Telekom AG, 53113 Bonn (DE)
(72) Erfinder: THIES, Emil, 47166 Duisburg (DE); WINTER, Alexander, 57612 Birnbach (DE)
(74) Vertreter: Raible Deissler Lehmann Patentanwälte PartG mbB

(56) Entgegenhaltungen:
- WO-A2-2004/100431
- US-A1- 2014 376 511

## Beschreibung

Die vorliegende Erfindung betrifft ein System und ein Verfahren zum Koppeln von VoIP Diensten von einem Mobilfunkanschluss und einem Festnetzanschluss.

IP-Telefonie, kurz für Internet-Protokoll-Telefonie, auch Internet-Telefonie oder Voice over IP (kurz VoIP) genannt, ist ein Telefonieren über Computernetzwerke, welche nach Internet-Standards aufgebaut sind. Dabei werden für Telefonie typische Informationen, wie bspw. Sprache und Steuerinformationen beispielsweise für einen Aufbau einer Verbindung, über ein Datennetz übertragen. Auf Seiten jeweiliger Gesprächsteilnehmer können Computer, auf IP-Telefonie spezialisierte Telefonendgeräte oder klassische Telefone, die über spezielle Adapter angeschlossen sind, die Verbindung herstellen. VoIP ist eine etablierte Technik zur Abwicklung von Sprachkommunikation über ein IP basiertes Netzwerk. Dabei steht der Begriff für eine Ansammlung konkreter Technologien/Protokolle, die jede(s) für sich nur einzelne Aspekte übernehmen und erst in Kombination einen gewünschten Nutzen erbringen. Durch einen derartigen modularen Aufbau ist es allerdings auch möglich, einzelne Funktionen/Aspekte unterschiedlich zu implementieren, ohne dass andere Funktionen davon tangiert werden.

IP-Telefonie ist eine Technologie, die es ermöglicht, einen Telefondienst auf IP-Infrastruktur zu realisieren, so dass diese die herkömmliche Telefontechnologie samt ISDN und allen Komponenten ersetzen kann.

Die Vermittlung von Telefonaten ist in Computernetzen eine wesentliche Aufgabe. Da viele Nutzer dynamisch mit dem Internet verbunden sind, so dass sich die IP-Adresse häufig ändert, scheidet die IP-Adresse selbst als "Telefonnummer" für die Kontaktaufnahme zu den VoIP-Telefonen aus. Ein Vermittlungsdienst in Form eines Servers, bspw. eines SIP (Session Initiation Protocol)-Servers, übernimmt diese Aufgabe und ermöglicht die Telefonie bei sich ändernden IP-Adressen der IP-Telefone. VoIP-Telefone melden sich beim Server unter Nennung eines ihnen zugeordneten Benutzernamens und ggf. Passworts an. Daher kennt der Server neben den jeweiligen Benutzernamen auch die aktuelle IP-Adresse der Telefone. Mit Hilfe der IP-Adresse des Telefons, die dem Server bekannt gemacht wurde, kann er die Vermittlung übernehmen, und das angewählte IP-Telefon klingelt in Abhängigkeit von dieser IP-Adresse.

Im Unterschied zur klassischen Telefonie werden bei VoIP keine dedizierten "Leitungen" durchgeschaltet, sondern die Sprache wird digitalisiert und in kleinen Daten-Paketen mittels des Internetprotokolls transportiert.

Damit in einem IP-basierten Netz eine Verbindung zu einem Gesprächspartner hergestellt werden kann, muss die aktuelle IP-Adresse des gerufenen Teilnehmers innerhalb des Netzes bekannt sein, jedoch nicht notwendigerweise auf der Seite des Anrufers. Geographisch feste Anschlüsse wie im Festnetz (PSTN) gibt es in rein IP-basierten Netzen nicht. Die Erreichbarkeit des Angerufenen wird, ähnlich wie in Mobilfunknetzen, durch eine vorangegangene Authentifizierung des Angerufenen und einer damit verbundenen Bekanntmachung seiner momentanen IP-Adresse ermöglicht. Insbesondere kann dadurch ein Anschluss unabhängig vom Aufenthaltsort des Nutzers genutzt werden, was als nomadische Nutzung bezeichnet wird. So sieht eine Nutzung von VoIP bspw. eine Registrierung mit Nutzername und/oder Passwort vor, damit sich ein VoIP Anbieter sicher sein kann, dass der Nutzer auch legitimiert ist, bspw. eine Rufnummer zu nutzen.

Aufgrund von Ortswechsel des Teilnehmers, Wechsel des Benutzers am selben PC oder der dynamischen Adressvergabe beim Aufbau einer Netzwerkverbindung ist eine feste Zuordnung von Telefonnummern zu IP-Adressen nicht möglich. Die allgemein angewandte Lösung besteht darin, dass die Teilnehmer oder deren Endgeräte ihre aktuelle IP-Adresse bei einem Dienstrechner (Server) unter einem Benutzernamen hinterlegen. Der Rechner für die Verbindungssteuerung, oder manchmal das Endgerät des Anrufers selbst, kann bei diesem Server die aktuelle IP-Adresse des gewünschten Gesprächspartners über den angewählten Benutzernamen erfragen und damit die Verbindung aufbauen.

Alternativ dazu kann ein VoIP Anbieter auch eine bereits bestehende Anmeldung wiederverwenden. So ist ein Telekommunikationsanbieter meistens ISP (Internet Service Provider) und VoIP Anbieter. In diesem Fall kann der VoIP Dienst die Anmeldung des zugrundeliegenden Internetzugangs (ISP) wieder verwenden.

Im Mobilfunk nennt man eine dazu entsprechende Implementierung VoLTE (VoiceOverLTE) und verwendet eine bestehende Anmeldung über eine SIM-Karte eines Netzanbieters, so dass keine zusätzliche Authentifikation mit Kundeninteraktion erforderlich ist. Hingegen muss bei VoWiFi (VoiceOverWiFi) eine zusätzliche Authentifizierung vorgeschaltet werden, da der jeweilige Nutzer den VoIP-Dienst in der Regel nicht direkt über das Netz des Mobilfunk-Anbieters, sondern über ein Fremdnetz nutzt.

Unter der Abkürzung FMC (Fix-Mobile Convergence) versteht man das Zusammenwachsen von Mobilfunk und Festnetz zu einem übergreifenden Verbund. Kunden mit Festnetz- und Mobilfunknetzverträgen bei ein und demselben Anbieter werden in der Regel Vorteile über beide jeweils bestehende Verträge gewährt. Damit diese Vorteile nur für die Zeit des Bestehens der jeweiligen Verträge in beiden Kommunikationswelten, d.h. Mobilfunk und Festnetz, gewährt werden, findet eine Verknüpfung der jeweiligen Verträge, d.h. bspw. eine Kopplung und/oder eine gegenseitige Referenz statt.

US 2014/126715 und WO 2014/019497 beschreiben bekannte Systeme aus dem Stand der Technik.

Es war nun eine Aufgabe der vorliegenden Erfindung, Kunden mit Festnetz- und Mobilfunknetzverträgen bei ein und demselben Anbieter eine vereinfachte Bereitstellung und integrierte Nutzung von VoIP-Diensten zu gewähren.

Dazu schlägt die vorliegende Erfindung ein Verfahren und ein System mit den Merkmalen der unabhängigen Patentansprüche vor. Ausgestaltungen sind den jeweiligen Unteransprüchen und der Beschreibung zu entnehmen.

Erfindungsgemäß wird ein Verfahren zum Koppeln von VoIP Diensten von einem Mobilfunkanschluss eines Nutzers in einem Mobilfunknetz und einem Festnetzanschluss des Nutzers bereitgestellt. Dabei werden der Mobilfunkanschluss und der Festnetzanschluss des Nutzers von ein und demselben Anbieter zur Verfügung gestellt, wobei der Nutzer mit einem ihm zugeordneten Mobilfunkendgerät über ein WLAN einer integrierten Zugriffseinheit seines Festnetzanschlusses, d.h. eines IAD (Internet Access Device), eine Internetverbindung aufbaut und sich über die Internetverbindung bei einem IMS (IP Multimedia Subsystem) des Mobilfunknetzes mit einer ihm zugeordneten SIM-Karte als VoWiFi-Nutzer legitimiert und registriert, wobei das Mobilfunknetz eine der integrierten Zugriffseinheit des Festnetzanschlusses zugeordnete IP-Adresse erhält, diese hinsichtlich einer Zuordnung zu einem Festnetzanschlusses prüft und nach Verifizierung der Zuordnung der IP-Adresse zu dem Festnetzanschluss des Nutzers den Nutzer, als Festnetz-Nutzer, als zu dem VoWiFi-Nutzer zugehörig registriert.

Letzteres bedeutet, dass dem VoWiFi-Nutzer der Nutzer als Festnetz-Nutzer zugeordnet wird.

Die Erfindung beschreibt eine technische Kopplung von VoIP Diensten bzw. Services von einem Mobilfunk- und einem Festnetzanschluss, auf Basis einer Mobilfunk-VoWiFi-Registrierung über ein WLAN des Festnetzanschlusses.

In möglicher Ausgestaltung wird beim Registrieren der IP-Adresse als zu dem VoWiFi-Nutzer zugehörig sowohl die IP-Adresse als auch der Festnetzanschluss des Nutzers und/oder eine Referenz auf den Festnetzanschluss des Nutzers registriert.

Gemäß einer weiteren Ausführungsform des erfindungsgemäßen Verfahrens wird eine vertragliche Verknüpfung von Mobilfunkanschluss und Festnetzanschluss geprüft.

Dabei wird zum Verifizieren der Zuordnung der IP-Adresse zu dem Festnetzanschluss des Nutzers als zu dem VoWiFi-Nutzer zugehörig bei einer FMC-Komponente nachgefragt, ob beide, der Mobilfunkanschluss und der Festnetzanschluss dem Nutzer zugeordnet sind.

Voraussetzung zur Durchführung des erfindungsgemäßen Verfahrens ist es, dass der Nutzer einen Festnetz-IP-Anschluss hat. Dieser beinhaltet einen ISP (Internet Service Provider) und einen VoIP Dienst. Ferner besitzt der Nutzer ein IAD (Internet Access Device), d.h. eine integrierte Zugriffseinheit seines Festnetzanschlusses, in welcher Nutzerdaten hinterlegt werden bzw. sind. Mit Hilfe der Nutzerdaten baut die Zugriffseinheit, d.h. der IAD, eine Internetverbindung auf und erhält vom Netzwerk eine IP Adresse. Wenn das IAD eine Telefonanlage umfasst, meldet diese sich beim VoIP Server, d.h beim IMS des Anbieters als VoIP Client an. Diese Anmeldung kann entweder auf Nutzerdaten basieren oder auch anonym auf der IP Adresse, da der ISP bereits weiß, welcher Nutzer sich hinter der IP Adresse verbirgt und so dem IMS (IP Multimedia Subsystem) eine Referenz auf den Nutzer übergeben kann. Dies trifft ferner auch für VoIP Apps zu, die am Festnetzanschluss genutzt werden, was deren Konfiguration stark vereinfacht. Alle am IAD angeschlossenen VoIP Clients arbeiten mit einer dem Festnetzanschluss zugeordneten Festnetznummer, über welche sie ebenfalls am IMS angemeldet werden.

Weitere Voraussetzung zur Durchführung des erfindungsgemäßen Verfahrens ist es, dass der Nutzer einen Mobilfunkanschluss mit Optionen zur Nutzung von VoLTE und VoWiFi hat.

Bei VoLTE ist das entsprechende Mobilfunkendgerät im entsprechenden Mobilfunknetz registriert und registriert sich ohne weitere Nutzerinteraktion über eine dem Nutzer zugeordnete SIM-Karte auch mit dem IMS des Mobilfunknetzes.

Bei VoWiFi ist das entsprechende Mobilfunkendgerät nicht direkt in dem Mobilfunknetz registriert, sondern hat eine Internetverbindung über ein WLAN-Netz, hier über ein WLAN des Festnetzanschlusses, aufgebaut. Über dieses WLAN registriert es sich bei dem IMS des Mobilfunknetzes des Mobilfunkanbieters. Da der Mobilfunkanbieter den Client nicht anhand seiner IP Adresse identifizieren kann, da die IP Adresse nicht von dem Mobilfunknetz selbst vergeben wurde, führt ein dem Mobilfunknetz zugeordnetes BGW (BorderGateWay) mit der SIM-Karte des Nutzers bzw. des Mobilfunkendgerätes einen Authentifizierungsprozess durch, bevor eine Verbindung und Anmeldung am IMS des Mobilfunknetzes erlaubt wird.

Im Rahmen der vorliegenden Erfindung wird ein Sonderfall ausgenutzt, nämlich, dass sich das Mobilfunkendgerät des Nutzers über das WLAN des IAD seines Festnetzanschlusses per VoWiFi anmeldet und der Anbieter für beide Netzwerke, d.h. für das Festnetz und das Mobilfunknetz der gleiche Telekommunikationsanbieter ist. Dabei ist es ferner denkbar, dass der jeweilige Nutzer im Rahmen eines FMC-Angebotes seine jeweiligen Verträge für den Festnetzanschluss und den Mobilfunkanschluss koppeln lässt. Dadurch hat der Telekommunikationsanbieter in einem hinterlegten Datensatz vermerkt, dass beide Anschlüsse, d.h. der Festnetzanschluss und der Mobilfunkanschluss, zum gleichen Nutzer gehören.

Gemäß einer weiteren möglichen Ausführungsform des erfindungsgemäßen Verfahrens wird dadurch ein an einer dem Mobilfunkanschluss zugeordneten Mobilfunknummer eingehender Anruf auch am Festnetzanschluss signalisiert.

Dabei wird in weiterer Ausgestaltung mindestens einem dem Festnetzanschluss zugeordneten Endgerät die Mobilfunknummer zugewiesen, so dass bei einem an der Mobilfunknummer eingehenden Anruf dieses mindestens eine dem Festnetzanschluss zugeordnete Endgerät eine Signalisierung des Anrufs ausgibt.

Das bedeutet, dass eingehende Anrufe an die Mobilfunknummer, im Folgenden auch MF-Nummer genannt, auch am Festnetzanschluss signalisiert werden. Der IAD bekommt aus dem Festnetz eine Signalisierung des Anrufes für die Mobilfunknummer. Sind die angeschlossenen Endgeräte, d.h. die dem Festnetzanschluss zugeordneten Endgeräte dazu konfiguriert, auf alle Rufnummern bzw. zumindest neben der Festnetznummer (im Folgenden auch FN-Nummer genannt) auch auf die MF-Nummer zu reagieren, so klingeln diese und zeigen den Anruf für die MF-Nummer an. Sind den Endgeräten nur bestimmte Rufnummern zugewiesen worden, so muss auch die MF-Nummer darunter sein, damit eine Signalisierung des an der Mobilfunknummer eingehenden Anrufs erfolgt. Eine Signalisierung kann dabei akustisch, d.h. durch akustische Signale und/oder visuell, d.h. durch visuelle Anzeigen auf einer Anzeigeeinheit (Display) erfolgen.

Demnach ist es in weiterer Ausgestaltung des erfindungsgemäßen Verfahrens vorgesehen, alle dem Festnetzanschluss zugeordneten bzw. an diesem angeschlossenen Endgeräte so zu konfigurieren, dass sie auf die Mobilfunknummer reagieren und bei einem eingehenden Anruf bei der Mobilfunknummer bspw. klingeln und den Anruf für die Mobilfunknummer anzeigen.

Der Begriff "Anruf ... anzeigen" ist im Rahmen der vorliegenden Offenbarung weit auszulegen und bedeutet bspw. den Anruf durch ein akustisches Signal mittels eines Lautsprechers und/oder durch eine visuelle Ausgabe auf einer Anzeigeeinheit anzuzeigen.

In noch einer weiteren Ausführungsform des erfindungsgemäßen Verfahrens ist vorgesehen, dass ein an einer dem Festnetzanschluss zugeordneten Festnetznummer eingehender Anruf auch am Mobilfunkanschluss signalisiert wird.

Dabei ist es denkbar, dass das Mobilfunknetz bei VoWiFi die Festnetznummer als angerufene Nummer mitgibt, so dass ein dem Mobilfunkanschluss zugeordnetes Mobilfunkendgerät bei einem eingehenden Anruf auf die Festnetznummer die Festnetznummer anzeigen und entsprechend reagieren, bspw. durch ein akustisches Signal ausgeben kann.

In weiterer Ausgestaltung des erfindungsgemäßen Verfahrens wird bei einem ausgehenden Anruf von einem dem Festnetzanschluss zugeordneten Endgerät als den Anruf auslösende Rufnummer eine dem Mobilfunkanschluss zugeordnete Mobilfunknummer ausgewählt und angezeigt.

In weiterer Ausgestaltung des erfindungsgemäßen Verfahrens wird bei einem ausgehenden Anruf von einem dem Mobilfunkanschluss zugeordneten mobilen Endgerät als den Anruf auslösende Rufnummer einem dem Festnetzanschluss zugeordnete Festnetznummer ausgewählt und angezeigt.

Dabei wird die Tatsache genutzt, dass ausgehende Anrufe normalerweise die Rufnummern nutzen, die ihnen vom Netz zugewiesen werden. Da im Festnetz am selben Festnetzanschluss in der Regel mehrere verschiedene Rufnummern gleichzeitig genutzt werden können, gibt es an dem Festnetzanschluss zugeordneten Endgeräten oft die Möglichkeit eine Rufnummer für einen ausgehenden Anruf auszuwählen. Auch im Mobilfunk existiert diese Möglichkeit teilweise bereits. Im Rahmen dieser zusätzlichen Funktionalität kann die Mobilfunkrufnummer an jeweiligen dem Festnetzanschluss zugeordneten Endgeräten genutzt werden und können jeweilige Festnetzrufnummern an einem dem Mobilfunknetzanschluss zugeordneten Mobilfunkendgerät genutzt werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnungen schematisch und ausführlich beschrieben.

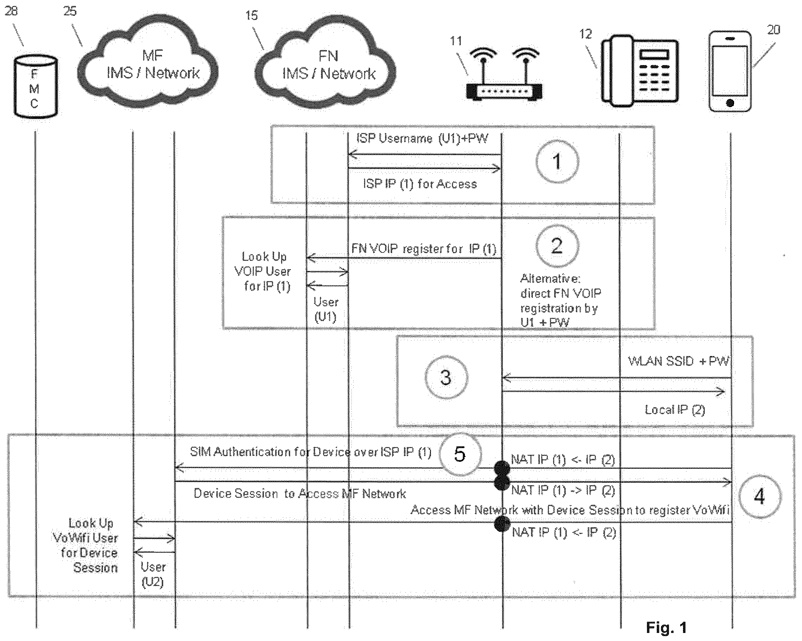

Die Figuren 1 bis 7 zeigen einen jeweiligen Aufbau von Kommunikationsverbindungen eines Festnetzanschlusses und eines Mobilfunkanschlusses eines Nutzers und ein Zusammenwirken dieser Anschlüsse bei Nutzung von VoIP Diensten.

Die Figuren werden zusammenhängend und übergreifend beschrieben, gleiche Bezugszeichen bezeichnen gleiche Komponenten.

Figur 1 zeigt Komponenten einer Ausführungsform eines erfindungsgemäßen Systems zur Durchführung einer Ausführungsform eines erfindungsgemäßen Verfahrens. Gezeigt ist ein Festnetz 15, das ein IMS (IP Multimedia Subsystem), d.h. einen VoIP Server, und ein IP Zugangs-Netzwerk (FN-Network) umfasst, und ein Mobilfunknetz 25 mit ebenfalls einem IMS und einem IP Zugangs-Netzwerk (MF-Network). Das IMS des Festnetzes 15 wird im Folgenden auch FN-IMS bezeichnet und das IMS des Mobilfunknetzes 25 wird im Folgenden auch MF-IMS bezeichnet. Ferner ist ein Festnetzanschluss eines Nutzers mit einem Endgerät 12 und einem IAD (Internet Access Device) 11 dargestellt. Darüber hinaus ist ein mobiles Endgerät bzw. ein Mobilfunkendgerät 20 mit einer darin angeordneten und einem Nutzer zugeordneten SIM-Karte gezeigt. Letztlich ist eine FMC-Komponente 28 darstellt.

Im Folgenden sollen nun anhand dieser Komponenten mögliche Ausführungen des erfindungsgemäßen Verfahrens dargelegt werden.

Ein Nutzer hat einen Festnetz IP-Anschluss, welcher einen ISP (Internet Service Provider) und einen VoIP-Dienst beinhaltet. Dazu verfügt der Nutzer über das IAD 11, in welchem Nutzerdaten des Nutzers hinterlegt sind. Die Nutzerdaten umfassen einen ISP-Nutzernamen, im Folgenden auch U1 bezeichnet, und ein Passwort PW. Mit Hilfe der Nutzerdaten baut das IAD 11 in einem Schritt 1 eine Internetverbindung mit dem IP Zugangs-Netzwerk des Festnetzes 15 auf. Auf Basis der Nutzerdaten wird der Nutzer authentifiziert und erhält vom Festnetz 15 bzw. vom IP-Zugangsnetzwerk eine IP-Adresse, im Folgenden auch "ISP IP (1) for Access" oder kurz IP(1) genannt.

Wenn das IAD 11 eine Telefonanlage enthält, meldet diese sich in einem Schritt 2 beim VoIP Server (FN-IMS) des Anbieters des Festnetzanschlusses als VoIP Client an. Diese Anmeldung kann entweder wie üblich auf den Nutzerdaten, d.h. Nutzernamen U1 und Kennwort PW, basieren, oder im vorliegenden Fall anonym auf der IP Adresse IP(1) ("FN VoIP register for IP(1)"), da der Anbieter des Festnetzanschlusses, welcher gleichzeitig ISP Anbieter ist, bereits weiß, welcher Nutzer sich hinter der IP Adresse IP(1) verbirgt und so kann das IP Zugangs-Netzwerk (FN-Network) dem FN-IMS, wie durch Hin- und Rückpfeil zwischen FN-IMS und FN-Network kenntlich gemacht, eine Referenz auf den Nutzer U1 übergeben.

In dem Schritt 2 registrieren sich der IAD 11 und VoIP Apps, die an dem Festnetzanschluss genutzt werden, über die bestehende Internetverbindung am FN-IMS des Festnetzes 15. Das Endgerät 12 arbeitet nunmehr mit einer der dem VoIP Client des IAD 11 und der dem IAD 11 zugeordnete (n) Festnetznummer (n), über welche der IAD 11 am FN-IMS angemeldet ist.

In einem Schritt 3 verbindet sich das Mobilfunkendgerät 20, das eine Option zur Nutzung von VoWiFi hat, über ein WLAN des IAD 11 unter Verwendung eines dem WLAN zugeordneten SSID (Service Set Identifier) und eines Passworts PW mit dem Internet, wie durch einen entsprechenden Pfeil (WLAN SSID + PW") angedeutet. Von dem IAD 11 wird dem Mobilfunkendgerät 20 eine lokale IP Adresse "Local IP (2)" zugewiesen, wie durch einen entsprechenden Pfeil kenntlich gemacht.

Bei VoWiFi ist das Mobilfunkendgerät 20 nicht direkt im Mobilfunknetz 25 registriert, sondern hat nunmehr die Internetverbindung über das voranstehend beschriebene WLAN aufgebaut. Über dieses WLAN des IAD 11 registriert sich das Mobilfunkendgerät 20 nun in einem Schritt 4 beim IMS des Mobilfunkanbieters, d.h. beim IMS des Mobilfunknetzes 25, in den Figuren als MF-IMS bezeichnet. Dies ist durch den Pfeil mit der Kennzeichnung "Access MF Network with Device Session to register VoWiFi" zwischen Mobilfunkendgerät 20 und IMS des Mobilfunknetzes 25 dargestellt. Da dieser den Nutzer nicht anhand seiner IP Adresse identifizieren kann, da die IP Adresse nicht vom Mobilfunknetz 25 vergeben wurde, führt ein BorderGateWay des Mobilfunknetzes 25, an dem sich das Mobilfunkendgerät 20 über das Internet meldet, in einem Schritt 5 mit der dem Nutzer zugeordneten und von dem Mobilfunkendgerät 20 umfassten SIM-Karte einen Authentifizierungsprozess durch, bevor eine Verbindung und Anmeldung am IMS des Mobilfunknetzes 25, d.h. am MF-IMS, erlaubt wird. Dies wird durch die Hin- und Rückpfeile zwischen Mobilfunkendgerät 20 und dem IP-Zugangsnetzwerk des Mobilfunknetzes 25 in Schritt 5 kenntlich gemacht. In dem Schritt 4 legitimiert sich der Nutzer bzw. sein Mobilfunkendgerät 20 mit der SIM-Karte als VoWiFi Nutzer bzw. VoWiFi Client, so dass das Mobilfunkendgerät 20 als VoIP Client U2 am IMS des Mobilfunknetzes 25, d.h. am MF-IMS registriert wird und darüber eine MF-Referenz erhält.

Da die Kommunikation des Mobilfunkendgeräts 20 mit dem Mobilfunknetz hier mittelbar über den IAD 11 verläuft, wird im IAD 11 ein sogenanntes NAT-Verfahren (Network Adress Translation) durchgeführt, um dem Mobilfunkendgerät 20, das im privaten WLAN des IAD 11 bzw. des Festnetzes 15 angemeldet ist und demnach eine lokale IP-Adresse IP(2) hat, den Zugang zum Internet, nämlich über die öffentlich registrierte IP-Adresse IP(1) des IAD 11 zu ermöglichen. Das bedeutet, dass die lokale IP-Adresse IP(2) der IP-Adresse IP(1) zugeordnet bzw. von dieser gekapselt wird, wie durch die jeweiligen Bezeichnungen auf den Pfeilen in Schritt 4 und 5 kenntlich gemacht.

Bei der Authentifizierung des Nutzers bzw. des Mobilfunkendgeräts 20 erhält das BorderGateWay des Mobilfunknetzes 25 (was Teil des IP-Zugangsnetzes des Mobilfunknetzes, d.h. des MF-Network, ist) und darüber auch der IMS des Mobilfunknetzes 25, d.h. der MF-IMS, die von dem Festnetz 15 vergebene IP Adresse "ISP IP (1) for Access" bzw. IP(1), d.h. die WAN (Wide Area Network) IP Adresse des IAD 11, da dieser per NAT (Network Address Translation) die "local IP (2)" bzw. IP(2) des Mobilfunkengerätes 20 kapselt.

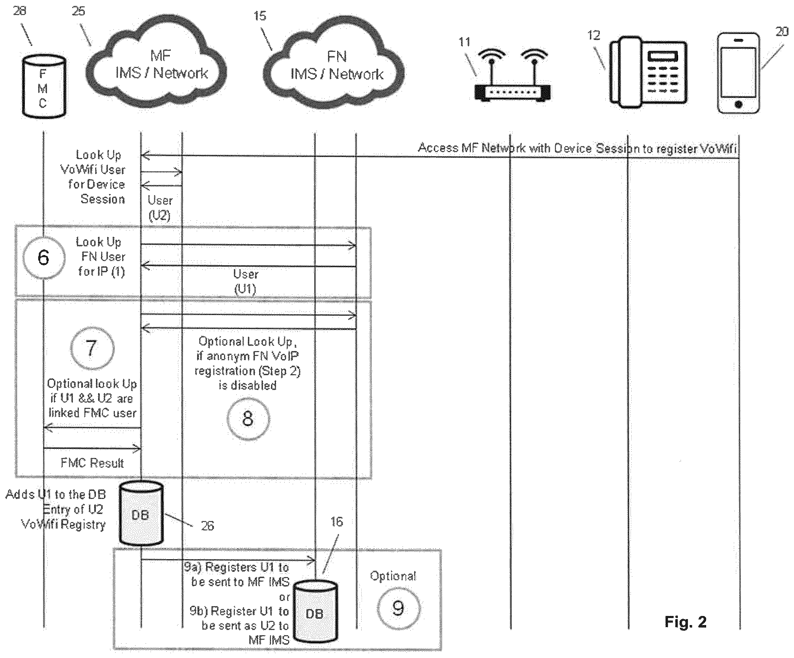

In einem Schritt 6 (siehe Figur 2) kann nun der IMS des Mobilfunknetzes 25, d.h. der MF-IMS, einen Applikationsserver anstoßen, damit dieser beim Festnetz 15, d. h. beim FN-Network, nachfragt, ob dieses die IP Adresse "ISP IP (1) for Access" bzw. IP(1), die das Mobilfunkendgerät 20 für den VoWiFi Zugang nutzt, vergeben hat ("Look Up FN User for IP(1)").

Kommt als Rückmeldung seitens des Festnetzes 15, dass die IP Adresse "ISP IP (1) for Access" bzw. IP(1) nicht vergeben ist, so folgt keine weitere Aktivität.

Kommt als Rückmeldung seitens des Festnetzes 15 eine FN-Referenz auf den Festnetznutzer U1, so legt der Applikationsserver diese Referenz in einer Datenbank 26 von VoWiFi Registrierungen (bzw. CNTDB = Common Network Technology Database) ab.

In einem Schritt 7 kann der Applikationsserver vor der Ergänzung der VoWiFi Registrierung um die FN-Referenz ("Adds U1 to the DB Entry of U2 VoWiFi Registry") optional noch eine Prüfung durchführen. Mit seiner MF-Referenz und der FN-Referenz U1 wird vorzugsweise bei der FMC-Kompomente 28, die bspw. durch ein CRM (= Customer Relationship Management) realisiert sein kann, nachgefragt, ob der der FN-Referenz zugeordnete Nutzer U1 und der der MF-Referenz zugeordnete Nutzer U2 im Rahmen eines FMC-Angebots miteinander verbunden sind, d.h. ob die jeweils abgeschlossenen Verträge bzgl. des Festnetzanschlusses und des Mobilfunkanschlusses miteinander gekoppelt sind ("Optional Look Up if U1 & U2 are linked FMC user"). Dies stellt sicher, dass nicht alle VoWiFi-Geräte im WLAN des Festnetzanschlusses das erfindungsgemäße Verfahren nutzen können. Zum einen kann dies aus kommerziellen Gründen z.B. zur Vermarktung von neuen Tarifen vom Telekommunikationsanbieter gewünscht sein. Zum anderen kann aber auch der Nutzer dies aus Sicherheitsaspekten wünschen. Letzteres setzt allerdings auch voraus, dass sich in Schritt 2 nicht alle VoIP Apps anonym am IMS des Festnetzes 15, d.h. am FN-IMS, anmelden können. Da ein solches Sicherheitsmerkmal vom Nutzer konfiguriert und im FN-IMS des Festnetzes 15 gespeichert wird, kann zu Beginn des Schritts 7 dort in einem optionalen Schritt 8 ausgehend vom IMS des Mobilfunknetzes 25 geprüft werden, ob der Nutzer die anonymen Anmeldungen abgestellt hat ("Optional Look Up if anonym FN VoIP registration (Step2) is disabled"). Wenn dem Nutzer dies möglich ist, muss der Nutzer die Zuordnung in der FMC-Komponente 28 bzw. in einer damit gekoppelten Datenbank 28 (im Rahmen von kommerziellen Vorgaben) ebenso vornehmen können.

Im Folgenden wird nunmehr davon ausgegangen, dass die Verträge bzgl. des Festnetzanschlusses und des Mobilfunkanschlusses im Rahmen eines FMC-Angebots miteinander gekoppelt sind. Ferner werden im Folgenden die FN-Referenz bzw. FN-Kennung und der der FN-Referenz zugeordnete Nutzer mit "U1" und die MF-Referenz bzw. MF-Kennung und der der MF-Referenz zugeordnete Nutzer mit "U2" bezeichnet.

Abschließend besteht noch eine weitere Optimierung in einem Schritt 9, dass der FN-IMS des Festnetzes 15 vom MF-IMS des Mobilfunknetzes 25 über die Registrierung des Festnetz-Nutzers U1 für die Funktionalität der erfindungsgemäßen Kopplung von VoIP Diensten zwischen Mobilfunkanschluss und Festnetzanschluss informiert wird und dies speichert. Hierbei sind zwei Varianten zu unterscheiden.

In Variante 9a ("Registers U1 to be sent to MF IMS") speichert der FN-IMS des Festnetzes 15 in einer Datenbank 16 am Nutzer U1 nur ein Flag, dass spätere Signalisierungen für diesen Nutzer auch an den MF-IMS des Mobilfunknetzes 25 gesendet werden. Die Variante 9b ("Register U1 to be sent as U2 to MF IMS") erweitert diesen Datensatz in der Datenbank 16 um die MF-Nutzerkennung U2, sodass in späteren Signalisierungen direkt auf den MF-Nutzer U2 referenziert werden kann.

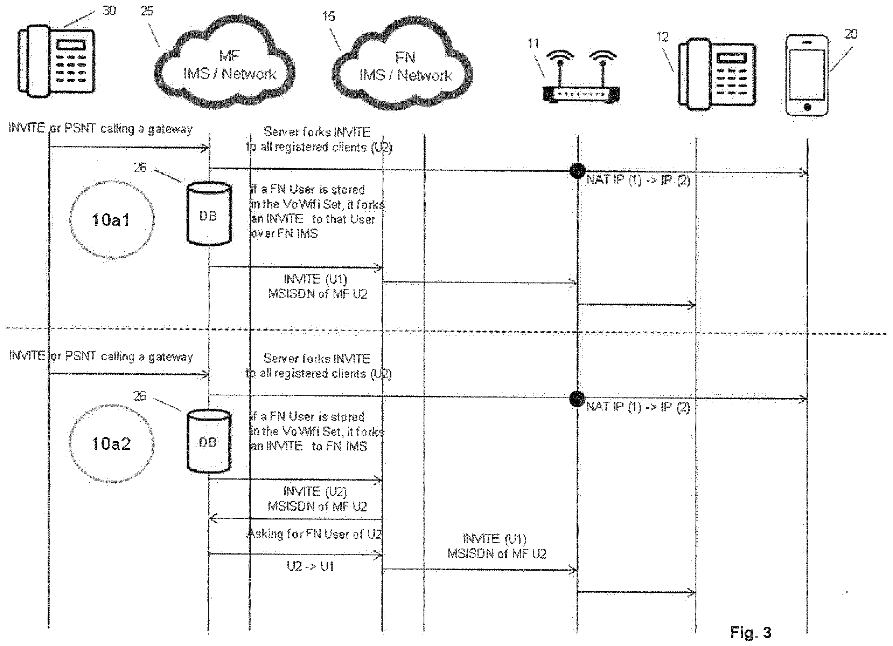

In einem Schritt 10 (siehe Figur 3 ff.) wird nunmehr ein Rufaufbau realisiert. Ein fremder Client 30 initiiert einen Anruf ("INVITE or PSNT calling a gateway"). Dieser Schritt ist in zwei Varianten zu unterteilen.

In Schritt 10a (siehe Figur 3 und 4) stellt der Client 30 unter Nutzung der an den Nutzer U2 vergebenen Mobilfunknummer MN-Rufnummer bzw. in Schritt 10b (siehe Figure 5, 6 und 7) unter Nutzung der an den Nutzer U1 vergebenen FN-Rufnummer eine Anfrage.

Im Detail bedeutet dies im Schritt 10a, einen INVITE-Request an den IMS des Mobilfunknetzes 25 zu senden, der seinerseits eine Prüflogik auf einem Applikationsserver startet. Mittels der Prüflogik wird im vorliegenden Fall festgestellt, dass es sich bei der VoWiFi-Registrierung des Nutzers U2 mit der angerufenen MN-Rufnummer um einen FMC-Subscriber handelt, d.h. dass der Nutzer einen Festnetzanschluss und einen Mobilfunkanschluss besitzt, deren zugehörigen Verträge mit dem Anbieter miteinander gekoppelt sind. Je nach unterstütztem Funktionsumfang des IMS des Mobilfunknetzes 25, d.h. des MF-IMS, forkt, d.h. splittet, eine zugehörige S-CSCF (Service Call Session Control Function), d.h. eine zentrale Einheit des IMS, die Multimedia-Sessions des MF-IMS steuert, den INVITE-Request selbst, oder triggert einen entsprechenden Applikationsserver, dass dieser den INVITE-Request forkt. Dabei wird nunmehr ein INVITE-Request an die angerufene Nummer, d.h. hier an den VoWiFi-Client 20 mit der MN-Rufnummer gesendet ("Server forks INVITE to all registered clients (U2)"). Ein zweiter INVITE-Request wird über einen I-CSCF (Interrogating Call Session Control Function) an den IMS des Festnetzes 15, d.h. den FN-IMS, geroutet ("INVITE (U1) MSISDN of MF U2"), wodurch letztlich die dort registrierten Clients, deren Rufnummern über die FMC-Einheit mit der MF-Rufnummer gekoppelt sind, den INVITE-Request erhalten. Alle Clients, welche den INVITE-Request erhalten, signalisieren dann den eingehenden Anruf. Als angerufene Nummer wird die MF-Rufnummer verwendet. Damit der IMS des Festnetzes 15 den INVITE Request an die richtigen Clients routet, d.h. an die Clients, deren ihnen jeweils zugeordnete Rufnummer mit der MF-Rufnummer gekoppelt sind, gibt es zwei Optionen:
Beim Forken wird in einem Schritt 10a1 bereits der Empfänger ausgetauscht, indem der MF-Nutzer U2 mit der MF-Rufnummer durch den FN-Nutzer U1 entsprechend der in der Datenbank 26 hinterlegten VoWiFi-Registrierung ersetzt wurde ("if a FN User is stored in the VoWiFi Set, it forks an INVITE to that User over FN IMS"). Sodann wird der INVITE Request über den IMS des Festnetzes 15, d.h. den FN-IMS, direkt an den Nutzer U1 bzw. an einen dem Nutzer U1 zugeordneten Anschluss / IAD 11, der den Anruf an das Endgerät 12 übermittelt, weitergeleitet. In einem dazu alternativen Schritt 10a2 wird der INVITE Request unverändert an den IMS des Festnetzes 15 gesendet ("if a FN User is stored in the VoWiFi Set, it forks an INVITE to FN IMS"), wobei der IMS des Festnetzes 15 erkennt, dass die angerufene Nummer, d.h. die MF-Rufnummer keine FN-Rufnummer ist und bei der VoWiFi-Registrierung für den der angerufenen MF-Rufnummer zugeordneten MF-Nutzer U2 und seine MF-Rufnummer den Nutzer des Festnetzes, d.h. den FN-Nutzer U1 anfragt ("Asking for FN User of U2"), der für die MF-Rufnummer hinterlegt ist, und bei Erhalt einer entsprechenden Rückmeldung dann den Empfänger U2 durch U1 ersetzt ("U2 -> U1") und diesem den Anruf für die MF-Rufnummer signalisiert ("INVITE (U1) MSISDN of MF U2").

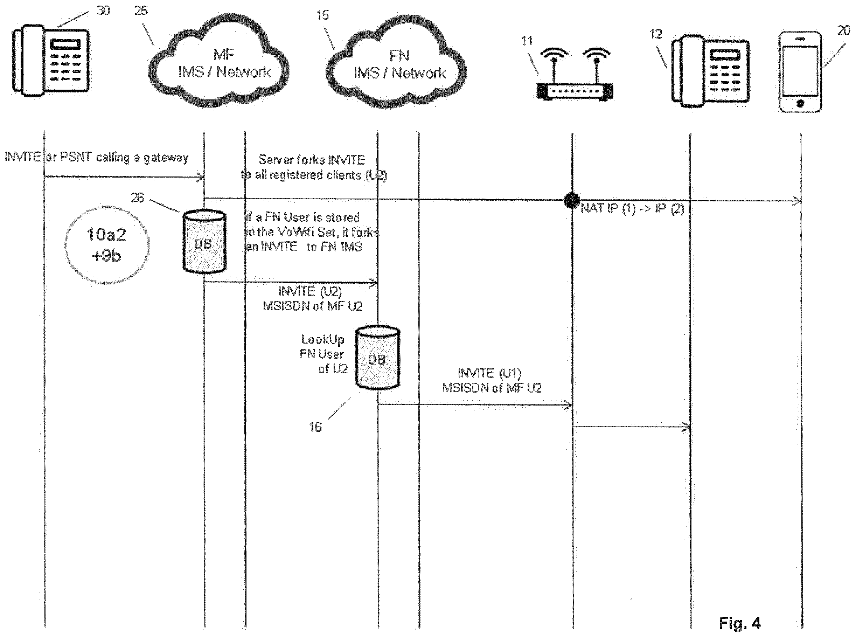

Alternativ zu der Anfrage bei der VoWiFi-Registrierung im MF-Netz 25 ist es auch denkbar, den Schritt 10a2 abzuwandeln, wenn bei der Registrierung der optionale Schritt 9b durchgeführt wurde (siehe Figur 4). Dann kann im Festnetz 15 selbst nachgeschlagen werden, ob ein Festnetzanschluss bzw. ein Festnetznutzer, d.h. ein FN-Nutzer, mit dem Mobilfunknutzer, d.h. dem MF-Nutzer, bzw. mit der angerufenen MF-Rufnummer gekoppelt ist ("Look Up FN User of U2"). Dies ist bei dem IMS des Festnetzes 15 bzw. einer damit verbundenen Datenbank 16 durch den Schritt 9b hinterlegt worden. Wird ein Festnetznutzer festgestellt, der mit der angerufenen MF-Rufnummer gekoppelt ist, sendet der IMS des Festnetzes 15, wie auch in den zuvor erläuterten Schritten 10a1 und 10a2, den INVITE Request zu dem IAD 11 des Festnetzanschlusses, welcher den INVITE-Request weiterleitet an ein der FN-Rufnummer zugeordnetes Endgerät 12.

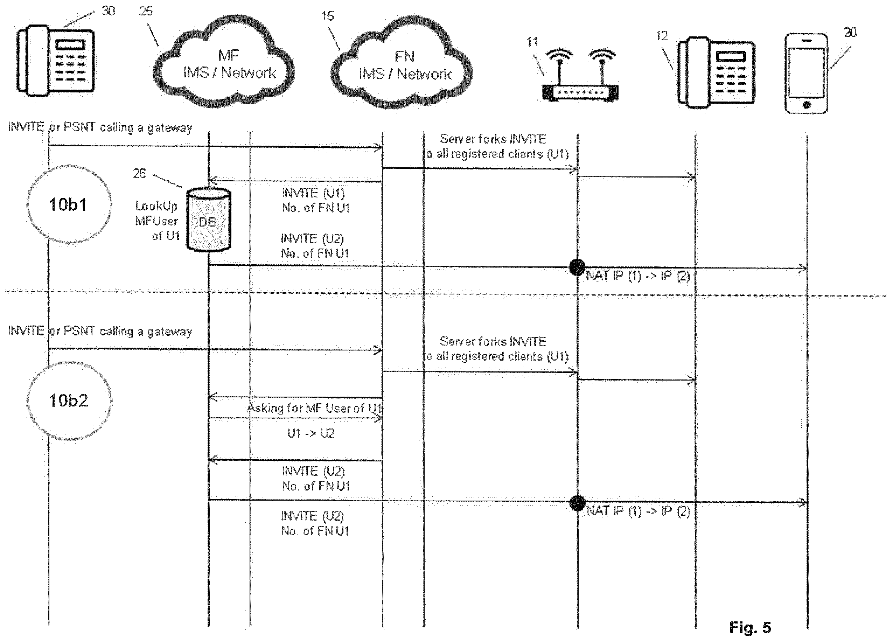

Erfolgt ein eingehender Anruf an das Festnetz 15 (siehe Figur 5, 6 und 7) in Schritt 10b, so verläuft ein Rufaufbau ähnlich wie über VoWiFi in Schritt 10a, nur in umgekehrter Richtung, nämlich mit der FN-Rufnummer des FN-Nutzers U1 als angerufener Rufnummer. Auch dieser Fall lässt sich in zwei Varianten unterteilen. Wenn der FN-IMS 15 beim Forken den Aufruf unverändert, d.h. signalisiert für den FN-Nutzer U1 und dessen FN-Rufnummer, an den MF-IMS 25 übergibt (Schritt 10b1 "INVITE (U1) No. of FN U1"), so muss dieser in der Registrierungsdatenbank 26 nachschlagen, welcher MF-Nutzer U2 dem FN-Nutzer U1 zugeordnet ist ("Look Up MF User of U1"). In der Signalisierung wird dann der FN-Nutzer U1 durch den MF-Nutzer U2, bei Beibehaltung der FN-Rufnummer, ausgetauscht ("INVITE (U2) No. of FN U1"). Anschließend wird die Signalisierung dem VoWiFi Endgerät 20 zugestellt.

Alternativ lässt sich die Funktionalität auch in einem Schritt 10b2 abbilden. Hierbei soll aber das FN-IMS des Festnetzes 15 direkt die veränderte Signalisierung an das MF-IMS des Mobilfunknetzes 25 übergeben, sodass dieses die Signalisierung nur an das VoWiFi Endgerät 20 weiterreichen muss. Damit das FN-IMS des Festnetzes 15 den MF-Nutzer U2 in der Signalisierung setzen kann, muss im Schritt 10b2 das FN-IMS des Festnetzes 15 beim MF-IMS des Mobilfunknetzes 25 nach dem MF-Nutzer U2 fragen, der dem FN-Nutzer U1 zugewiesen ist ("Asking for MF User of U1").

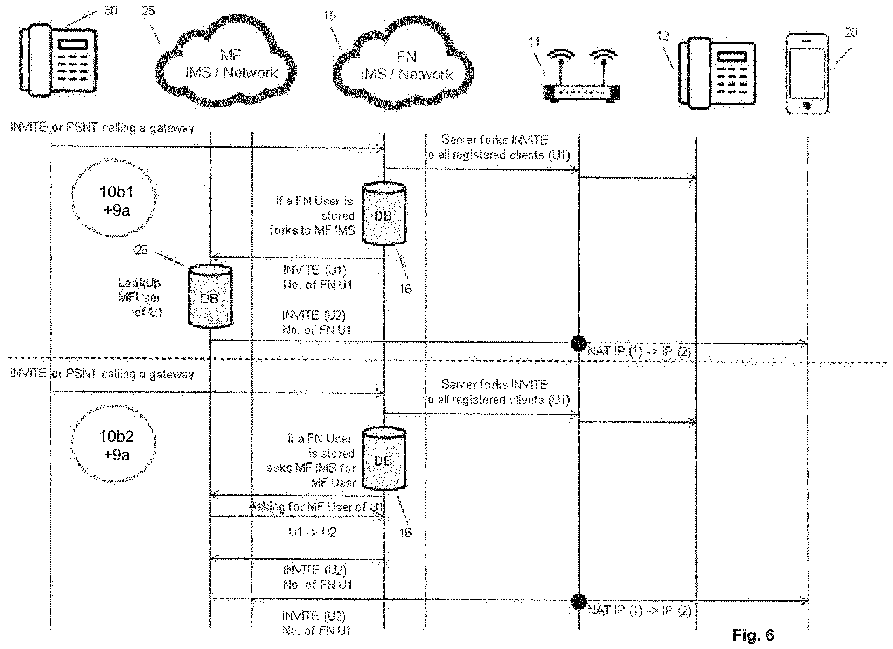

In beiden Fällen ist keine Information über eine dem FN-Nutzer U1 zugewiesene MF-Registrierung im Festnetz 15 hinterlegt, sodass alle INVITE-Requests zu Traffic bzw. Verkehr auf dem IMS des Mobilfunknetzes 25, d.h. dem MF-IMS, (Schritt 10b) führen. Dem kann abgeholfen werden, wenn im Festnetz 15 bei der Datenbank 16 für VoIP Registrierungen mindestens eine Markierung, d.h. ein Flag geführt wird (siehe Figur 6), wie voranstehend in Schritt 9a erwähnt, in welcher die VoWiFi-Registrierung im Mobilfunknetz hinterlegt ist. Mit diesem Flag in der Datenbank 16 kann der IMS des Festnetzes 15 bzw. ein Applikationsserver in dessen Auftrag nur INVITE-Requests an den IMS des Mobilfunknetzes 25 durchrouten, wenn für den angerufenen FN-Nutzer U1 das Flag gesetzt ist.

Diese vorgelagerte Prüfung ("if a FN User is stored forks to MF IMS") ist sowohl im Schritt 10b1 als auch im Schritt 10b2 möglich, wenn während der Registrierung der optionale Schritt 9a durchgeführt wird. Die daraus resultierenden Varianten sind in Figur 6 dargestellt.

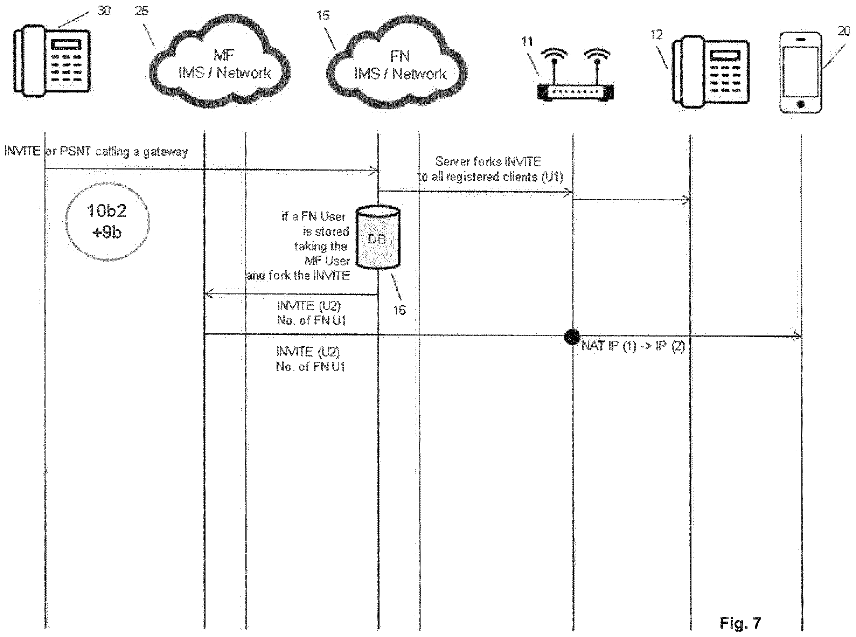

Wenn bei der Propagierung der Registrierung nicht nur ein Flag gesetzt wird (Schritt 9a), sondern in der VoIP-RegistrierungsDatenbank 16 zu dem FN-Nutzer U1 auch eine Referenz auf den MF-Nutzer U2 hinterlegt wird, ergibt sich ein alternativer Schritt (siehe Figur 7)

In diesem braucht der FN-IMS des Festnetzes 15 beim Forken nicht das MF-IMS des Mobilfunknetzes 25 zum Austauschen seines FN-Nutzers U1 durch den zugehörigen MF-Nutzer U2 in der Signalisierung. Das FN-IMS bzw. ein Applikationsserver in seinem Auftrag kann in der VoIP Registrierungsdatenbank 16 direkt den zugehörigen MF-Nutzer U2 nachschlagen und diesen in der Signalisierung zum MF-IMS einsetzen ("if a FN User is stored taking the MF User and fork the INVITE"). Wie bei 10b2 bleibt die FN-Rufnummer natürlich unverändert und der MF-IMS 25 übergibt die Signalisierung an das VoWiFi Endgerät 20, welches dann den Anruf an die FN-Rufnummer signalisiert.

Bei der VoWiFi-Deregistrierung wird je nach Umsetzungsvariante (Schritt 9a bzw. 9b) dem IMS des Festnetzes 15, d.h. dem FN-IMS, mitgeteilt, dass für den entsprechenden Festnetzanschluss nicht mehr zum IMS des Mobilfunknetzes 25 geroutet wird, d.h. der IMS des Festnetzes 15 bzw. dessen Applikationsserver trägt diesen MF-Nutzer U2 des entsprechenden Festnetzanschlusses des Festnetz-Nutzers U1 aus seiner Datenbank 16 aus.

Sollte bei einer der alternativen Schritte für 10b der VoWiFi-Client zum Zeitpunkt des Rufaufbaus (INVITE) nicht an dem IMS des Mobilfunknetzes 25 registriert sein, so wird der Request vom IMS des Mobilfunknetzes 25 mit 480, d.h. "temporarily unavailable" beantwortet. Die registrierten FN-Clients signalisieren den eingehenden Anruf dennoch.

Die verschiedenen Umsetzungsmöglichkeiten lassen sich auf eine optimale Implementierung reduzieren.

Über einen Dienst im Festnetz wird zunächst ein Festnetz VoIP-Konto bzw. -Account zu einer Festnetz IP-Adresse angefragt (Schritt 6). Ferner wird eine VoWiFi-Registrierung um ein optionales Feld für einen Festnetz VoIP-Account, der bei der VoWiFi-Registrierung gesetzt werden kann, erweitert. Darüber hinaus ist es sinnvoll, den Festnetz IMS, d.h. FN-IMS, bzw. dessen Applikationsserver um eine Abbildungs(Mapping-)tabelle "MF - FN VoIP Account" zu erweitern, wobei diese Werte bzw. Zuordnungen aus dem Mobilfunk gesetzt bzw. gelöscht werden (Schritt 9b), wenn dort eine VoWiFi Registrierung verwaltet wird. Eine optimale Anrufsignalisierung erfolgt dann über Schritt 10a2+9b (siehe Figur 4) für Anrufe ans Mobilfunknetz 25 bzw. über Schritt 10b2+9b (Figur 7) für Anrufe ans Festnetz 15.

Bei besonders enger Netztopologie kann der Applikationsserver für die beiden IMS, d.h. für MF-IMS und FN-IMS, derselbe sein, so dass keine zusätzliche Abbildungstabelle gepflegt werden muss und dort immer, unabhängig davon von wo aus gestartet wird, vom Festnetz oder vom Mobilfunknetz in der VoWiFi Registrierungstabelle nachgeschaut wird.

## Patentansprüche

1. Verfahren zum Koppeln von VoIP Diensten von einem Mobilfunkanschluss eines Nutzers in einem Mobilfunknetz und einem Festnetzanschluss des Nutzers, wobei der Mobilfunkanschluss des Nutzers und der Festnetzanschluss des Nutzers von ein und demselben Anbieter zur Verfügung gestellt werden, wobei der Nutzer mit einem ihm zugeordneten Mobilfunkendgerät (20) über ein WLAN einer integrierten Zugriffseinheit (11) seines Festnetzanschlusses eine Internetverbindung aufbaut und sich über die Internetverbindung bei einem IMS des Mobilfunknetzes (25) mit einer ihm zugeordneten SIM-Karte als VoWiFi-Nutzer (U2) legitimiert und registriert, wobei das Mobilfunknetz (25) eine der integrierten Zugriffseinheit (11) des Festnetzanschlusses zugeordnete IP-Adresse erhält, diese hinsichtlich einer Zuordnung zu einem Festnetzanschlusses prüft und nach Verifizierung der Zuordnung der IP-Adresse zu dem Festnetzanschluss des Nutzers den Nutzer als Festnetz-Nutzer (U1) als zu dem VoWiFi-Nutzer (U2) zugehörig registriert.

2. Verfahren nach Anspruch 1, bei dem beim Registrieren des Nutzers als zu dem VoWiFi-Nutzer (U2) zugehörigen Festnetz-Nutzer (U1) sowohl die IP-Adresse als auch der Festnetzanschluss des Nutzers und/oder eine Referenz auf den Festnetzanschluss des Nutzers registriert wird.

3. Verfahren nach Anspruch 1 oder 2, bei dem zum Verifizierung der Zuordnung der IP-Adresse zu dem Festnetzanschluss des Nutzers bei einer FMC Komponente (28) nachgefragt wird, ob beide, der Mobilfunkanschluss und der Festnetzanschluss dem Nutzer zugeordnet sind.

4. Verfahren nach einem der voranstehenden Ansprüche, bei dem ein an einer dem Mobilfunkanschluss zugeordneten Mobilfunknummer eingehender Anruf auch am Festnetzanschluss signalisiert wird.

5. Verfahren nach Anspruch 4, bei dem mindestens einem dem Festnetzanschluss zugeordneten Endgerät (12) die Mobilfunknummer zugewiesen wird, so dass bei einem an der Mobilfunknummer eingehenden Anruf dieses mindestens eine dem Festnetzanschluss zugeordnete Endgerät (12) eine Signalisierung des Anrufs ausgibt.

6. Verfahren nach Anspruch 5, bei dem alle dem Festnetzanschluss zugeordneten bzw. an diesem angeschlossenen Endgeräte (12) so konfiguriert werden, dass sie auf die Mobilfunknummer reagieren und bei einem eingehenden Anruf auf der Mobilfunknummer ein akustisches Signal ausgeben und/oder den Anruf für die Mobilfunknummer anzeigen.

7. Verfahren nach einem der voranstehenden Ansprüche, bei dem ein an einer dem Festnetzanschluss zugeordneten Festnetznummer eingehender Anruf auch am Mobilfunkanschluss signalisiert wird.

8. Verfahren nach Anspruch 7, bei dem das Mobilfunknetz bei VoWiFi die Festnetznummer als angerufene Nummer mitgibt, so dass ein dem Mobilfunkanschluss zugeordnetes Mobilfunkendgerät (20) die Festnetznummer anzeigen kann.

9. Verfahren nach einem der voranstehenden Ansprüche, bei dem bei einem ausgehenden Anruf von einem dem Festnetzanschluss zugeordneten Endgerät (12) als den Anruf auslösende Rufnummer eine dem Mobilfunkanschluss zugeordnete Mobilfunknummer ausgewählt und angezeigt wird.

10. Verfahren nach einem der voranstehenden Ansprüche, bei dem bei einem ausgehenden Anruf von einem dem Mobilfunkanschluss zugeordneten mobilen Endgerät (20) als den Anruf auslösende Rufnummer einem dem Festnetzanschluss zugeordnete Festnetznummer ausgewählt und angezeigt wird.

11. System zum Koppeln von VoIP Diensten von einem Mobilfunkanschluss eines Nutzers in einem Mobilfunknetz (25) und einem Festnetzanschluss des Nutzers, wobei der Mobilfunkanschluss und der Festnetzanschluss des Nutzers von ein und demselben Anbieter zur Verfügung gestellt sind, wobei das System ein dem Nutzer zugeordnetes Mobilfunkendgerät (20) umfasst, das dazu konfiguriert ist, über ein WLAN einer integrierten Zugriffseinheit (11) seines Festnetzanschlusses eine Internetverbindung aufzubauen und sich über die Internetverbindung bei einem IMS des Mobilfunknetzes (25) mit einer ihm zugeordneten SIM-Karte als VoWiFi-Nutzer (U2) zu legitimieren und registrieren, wobei das Mobilfunknetz (25) eine der integrierten Zugriffseinheit (11) des Festnetzanschlusses zugeordnete IP-Adresse erhält, diese hinsichtlich einer Zuordnung zu einem Festnetzanschlusses prüft und nach Verifizierung der Zuordnung der IP-Adresse zu dem Festnetzanschluss des Nutzers den Nutzer als Festnetz-Nutzer (U1) als zu dem VoWiFi-Nutzer (U2) zugehörig registriert.

12. System nach Anspruch 11, das dazu konfiguriert ist, ein Verfahren nach einem der Ansprüche 1 bis 10 auszuführen.

## Claims

1. A method for coupling of VoIP services from a mobile wireless connection of a user in a mobile wireless network and a fixed line connection of the user, wherein the wireless connection of the user and the fixed line connection of the user are provided by one and the same provider, wherein the user with a mobile terminal (20) assigned to him establishes an Internet connection via a WLAN of an integrated access unit (11) of the user's fixed line connection and via the Internet connection identifies himself to and registers with an IMS of the mobile wireless network (25) as a VoWifi user (U2) using a SIM card allocated to him, wherein the mobile wireless network (25) receives an IP address allocated to the integrated access unit (11) of the fixed line connection, checking said IP address for an allocation to a fixed line connection and registering the user as fixed line user (U1) associated with the VoWiFi user (U2) after verifying the allocation of the IP address to the fixed line connection of the user.

2. The method of claim 1, wherein both the IP address and the fixed line connection of the user and/or a reference to the fixed line connection of the user are registered during the registration of the user as fixed line user (U1) associated with the VoWiFi user (U2).

3. The method of claim 1 or 2, wherein for the verification of the allocation of the IP address to the fixed line connection of the user a FMC component (28) is queried whether both the mobile wireless connection and the fixed line connection are allocated to the user.

4. The method according to any one of the preceding claims, wherein an incoming call for a mobile number allocated to a mobile wireless connection is also signaled by the fixed line connection.

5. The method of claim 4, wherein at least one terminal (12) allocated to the fixed line connection is assigned the mobile number such that this at least one terminal (12) allocated to the fixed line connection outputs a signal of the call in the event of an incoming call for the mobile number.

6. The method of claim 5, wherein all terminals (12) allocated or connected to the fixed line connection are configured in such a way that they respond to the mobile number and sound an acoustic signal and/or display the call for the mobile number when there is an incoming call for the mobile number.

7. The method according to any one of the preceding claims, wherein an incoming call for a fixed line number allocated to the fixed line connection is also signaled by the mobile wireless connection.

8. The method of claim 7, wherein in the case of VoWiFi the mobile wireless network includes the fixed line number as the called number such that a mobile terminal (20) allocated to the mobile wireless connection can display the fixed line number.

9. The method according to any one of the preceding claims, wherein a mobile number allocated to the mobile wireless connection is selected and displayed as the call dialing number in the event of an outbound call from a terminal (12) allocated to the fixed line connection.

10. The method according to any one of the preceding claims, wherein a fixed line number allocated to the fixed line connection is selected and displayed as the call dialing number in the event of an outbound call from a mobile terminal (20) allocated to the mobile wireless connection.

11. A system for coupling of VoIP services from a mobile wireless connection of a user in a mobile wireless network (25) and a fixed line connection of the user, wherein the wireless connection and the fixed line connection of the user are provided by one and the same provider, wherein the system comprises a mobile terminal (20) allocated to the user, said terminal being configured to establish an Internet connection via a WLAN of an integrated access unit (11) of the user's fixed line connection and to identify himself to and to register with an IMS of the mobile wireless network (25) as a VoWifi user (U2) using a SIM card allocated to him, wherein the mobile wireless network (25) receives an IP address allocated to the integrated access unit (11) of the fixed line connection, checking said IP address for an allocation to a fixed line connection and registering the user as fixed line user (U1) associated with the VoWiFi user (U2) after verifying the allocation of the IP address to the fixed line connection of the user.

12. The system of claim 11, wherein the system is configured to execute a method according to any one of claims 1 to 10.

## Revendications

1. Procédé pour coupler des services VoIP d'une connexion mobile sans fil d'un utilisateur dans un réseau mobile sans fil et d'une connexion par ligne fixe de l'utilisateur, la connexion sans fil et la connexion par ligne fixe de l'utilisateur étant fournies par le même fournisseur, l'utilisateur établissant à l'aide d'un terminal mobile (20) qui lui est attribué, une connexion Internet via un réseau local sans fil (WLAN) de son unité d'accès intégrée (11) de la connexion par ligne fixe de l'utilisateur et s'identifiant et s'enregistrant via la connexion Internet, avec la carte SIM qui lui est attribuée, auprès d'un IMS du réseau mobile sans fil (25) en tant qu'utilisateur VoWifi (U2), le réseau mobile sans fil (25) recevant une adresse IP attribuée à l'unité d'accès intégrée (11) de la connexion par ligne fixe, contrôlant ladite adresse IP pour déterminer une attribution à une connexion par ligne fixe et enregistrant l'utilisateur en tant qu'utilisateur de ligne fixe (U1) comme associé à l'utilisateur VoWifi (U2) après vérification de l'attribution de l'adresse IP à la connexion par ligne fixe de l'utilisateur.

2. Procédé de la revendication 1, l'adresse IP et la connexion par ligne fixe de l'utilisateur et/ou une référence à la connexion par ligne fixe de l'utilisateur étant enregistrées lors l'enregistrement de l'utilisateur en tant qu'utilisateur de ligne fixe (U1) associé à l'utilisateur VoWifi (U2).

3. Procédé de la revendication 1 ou 2, un composant FMC (28) étant interrogé pour vérifier l'attribution de l'adresse IP à la connexion par ligne fixe de l'utilisateur, pour savoir si la connexion mobile sans fil et la connexion par ligne fixe sont attribuées à l'utilisateur.

4. Procédé selon l'une quelconque des revendications précédentes, un appel entrant pour un numéro mobile attribué à la connexion sans fil mobile étant également signalé sur la connexion par ligne fixe.

5. Procédé de la revendication 4, le numéro mobile étant assigné à au moins un terminal (12) attribué à la connexion par ligne fixe de sorte que ce au moins un terminal (12) attribué à la connexion par ligne fixe émet un signal d'appel en cas d'appel entrant pour le numéro mobile.

6. Procédé de la revendication 5, tous les terminaux (12) attribués ou connectés à la connexion par ligne fixe étant configurés de sorte qu'ils répondent au numéro mobile et produisent un signal acoustique et/ou affichent l'appel pour le numéro mobile lors d'un appel entrant pour le numéro mobile.

7. Procédé selon l'une quelconque des revendications précédentes, un appel entrant pour un numéro de ligne fixe attribué à une connexion par ligne fixe étant également signalé sur la connexion mobile sans fil.

8. Procédé de la revendication 7, le réseau mobile sans fil dans le cas du VoWifi transmettant également le numéro de ligne fixe en tant que numéro appelé, de sorte qu'un terminal mobile (20) attribué à la connexion mobile sans fil peut afficher le numéro de la ligne fixe.

9. Procédé selon l'une quelconque des revendications précédentes, un numéro mobile attribué à la connexion sans fil mobile étant sélectionné et affiché en tant que numéro d'appel initiant l'appel lors d'un appel sortant d'un terminal (12) attribué à la connexion par ligne fixe.

10. Procédé selon l'une quelconque des revendications précédentes, un numéro de ligne fixe attribué à la connexion par ligne fixe étant sélectionné et affiché en tant que numéro d'appel initiant l'appel en cas d'appel sortant d'un terminal mobile (20) attribué à la connexion mobile sans fil.

11. Système pour coupler des services VoIP d'une connexion mobile sans fil d'un utilisateur dans un réseau mobile sans fil (25) et d'une connexion par ligne fixe de l'utilisateur, la connexion sans fil et la connexion par ligne fixe de l'utilisateur étant fournies par le même fournisseur, le système comprenant un terminal mobile (20) attribué à l'utilisateur, ledit terminal étant configuré pour établir une connexion Internet via un réseau sans fil local (WLAN) d'une unité d'accès intégrée (11) de la connexion par ligne fixe de l'utilisateur et pour s'identifier et s'enregistrer avec la carte SIM qui lui est attribuée auprès d'un IMS du réseau mobile sans fil (25) en tant qu'utilisateur VoWifi (U2), le réseau mobile sans fil (25) recevant une adresse IP attribuée à l'unité d'accès intégrée (11) de la connexion par ligne fixe, contrôlant ladite adresse IP pour déterminer une attribution à une connexion par ligne fixe et enregistrant l'utilisateur en tant qu'utilisateur de ligne fixe (U1) comme associé à l'utilisateur VoWifi (U2) après vérification de l'attribution de l'adresse IP à la connexion par ligne fixe de l'utilisateur.

12. Système de la revendication 11, le système étant configuré pour exécuter un procédé selon l'une quelconque des revendications 1 à 10.
